# EUROPEAN PATENT APPLICATION

(11) **EP 4 529 765 A1**
(43) Date of publication of application: **02.04.2025**
(21) Application number: 23382973.8
(22) Date of filing: 26.09.2023
(51) Int. Cl.: A01N 25/02, A01P 21/00, A01N 3/02, A01N 37/26

(54) **DIFORMYLAMINE AS A BIOSTIMULANT**

(71) Applicant: Seipasa S.A., 22240 Tardienta (Huesca) (ES)
(72) Inventor: GUIJARRO BARRAGÁN, Rubén, E-22240 Tardienta, Huesca (ES); ESPINOSA ESCRIG, Francisco, E-22240 Tardienta, Huesca (ES); PELEATO ESTAÚN, Pedro Luis, E-22240 Tardienta, Huesca (ES)
(74) Representative: ABG Intellectual Property Law, S.L.

(57) **Abstract**

The present invention relates to the use of diformylamine or an agriculturally acceptable salt thereof as an agricultural biostimulant.

## Description

### FIELD OF THE INVENTION

The present invention relates to the use of diformylamine or an agriculturally acceptable salt thereof as an agricultural biostimulant.

### BACKGROUND OF THE INVENTION

The agricultural sector is facing the challenges of rising the productivity to feed the growing global population and increasing the resources use efficiency, while reducing the environmental impact on the ecosystems and human health. Also, according to the actual climate change scenario, unfavorable environmental and soil conditions in particular drought, salinity, and extreme temperature, are expected to have an increased negative impact, posing serious concerns on crop productivity, and thus food security worldwide.

Fertilizers and pesticides play a crucial role in agriculture, representing a powerful tool for growers to increase yield and guarantee continuous productivity throughout the seasons under both optimal and suboptimal conditions. Fertilizers provide nutrients to the plants that are necessary for their growth and development, while pesticides protects them against plagues, diseases or weeds.

Several technological strategies have been proposed to enhance the sustainability of agricultural production systems, through a significant reduction of synthetic agrochemicals like pesticides and fertilizers. A promising alternative is the use of plant biostimulants that enhance nutrient uptake and efficiency, crop quality, and tolerance to abiotic stress (including climate shocks such as floods, drought, and extreme temperatures) benefitting both plant yield and vigour.

Agricultural biostimulants act on the plant's natural biochemical processes, helping to boost crop growth, quality and productivity by stimulatjng its natural processes, promoting plant growth and development.

A variety of biostimulants are known in the art, such as humic substances which include humic and fulvic acids, seaweed extracts, and microbial biostimulants.

Nevertheless, there remains a need for further biostimulants.

### SUMMARY OF THE INVENTION

It has unexpectedly been found that diformylamine can be used as a plant biostimulant.

Thus, the present invention relates to the use of diformylamine or an agriculturally acceptable salt thereof as a plant biostimulant.

### DESCRIPTION OF THE FIGURES

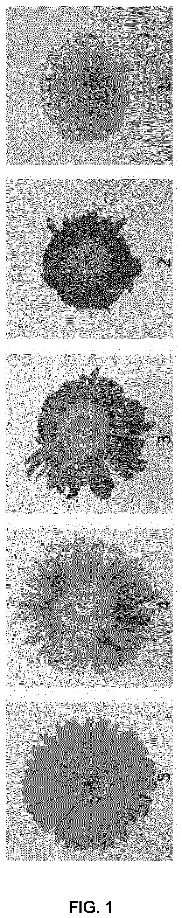

Figure 1 shows the scale used for assessing the visual aspect/appearance of flowers.

### DETAILED DESCRIPTION OF THE INVENTION

The present invention relates to the use of diformylamine or an agriculturally acceptable salt thereof as a plant biostimulant.

This aspect may also be formulated as a method for the biostimulation of plants comprising the application of diformylamine or an agriculturally acceptable salt thereof.

Diformylamine is the compound of formula (I) depicted below, which is also known as *N-*formylformamide, formimidol, *N*-formylformimidic acid and diformamide.

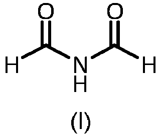

The sodium and potassium salts of diformylamine were disclosed by Jitendra Nath Bakshit in 1913 (J. Chem. Soc. Trans., 1913, 103, 1557-1562) by reaction of formamide with metal sodium or potassium, respectively.

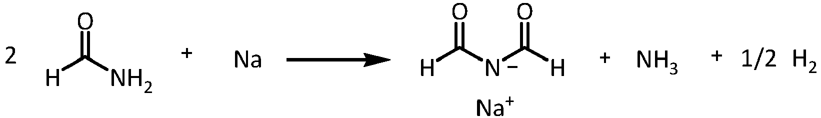

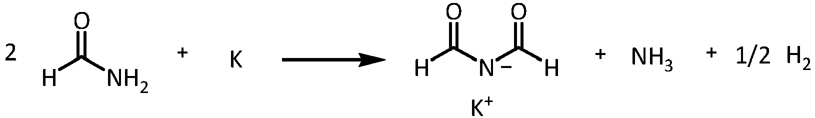

In 1967, Eckhard Allenstein (Chem Ber., 1967, 100, 3551-3563) disclosed the free form of diformylamine and several methods for its preparation as well as its sodium salt.

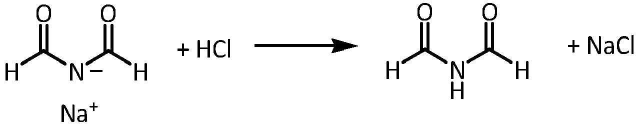

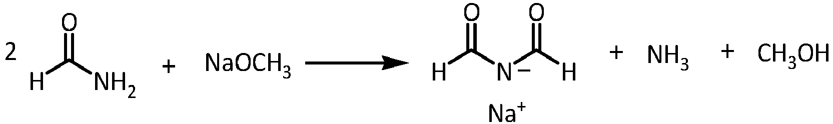

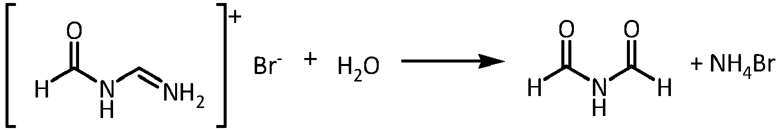

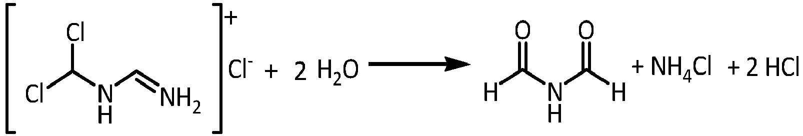

As used herein, "agriculturally acceptable salts" refers to any ionic form of the anion of diformylamine and a cation as counterion which does not have any harmful effect on plants. For instance, agriculturally acceptable salts of diformylamine are metallic salts or base addition salts, and they can be synthesized as described above. Examples of the metallic salts include, for example, sodium, potassium, hafnium, calcium, magnesium, aluminium and lithium salts, preferably sodium and potassium salts, more preferably potassium salt. Examples of the alkali addition salts include inorganic salts such as, for example, ammonium, and organic alkali salts such as, for example, ethylenediamine, ethanolamine, N,N-dialkylenethanolamine, triethanolamine, glucamine and basic aminoacids salts.

In a preferred embodiment of the invention, diformylamine is in the form of free diformylamine, its potassium salt or mixtures thereof; more preferably as a mixture of the free form of diformylamine and its potassium salt.

As used herein, the expression "free form of diformylamine" or "in the form of free diformylamine" refers to the non-ionized form of diformylamine, as in formula (I) depicted above.

In the context of the present invention, the term "biostimulant" refers to any substance of composition that has a positive effect on plants, in particular whose effect are improving one or more of nutrient absorption, reducing the damage caused by abiotic stress and abiotic (including drought, extreme temperatures, such as cold, frost, and heat, and salinity), improving soil conditions, and promoting the development of the crop by enhancing the root, the plant growth, the flowering, the fruit setting and/or the fattening.

Diformylamine or an agriculturally acceptable salt thereof can be used according to the present invention in any type of plants. Preferably, the plant is selected from the group consisting of cereal plants, vegetable plants, legume plants, fruit plants, industrial plants (such as oilseed plants, aromatic plants, medicinal plants, and forage plants), and ornamental plants; more preferably the plant is selected from the group consisting of vegetable plants, cereal plants, legume plants, fruit plants, textile plants, oilseed plants, aromatic plants, medicinal plants, forage plants, flowers and ornamental plants; still more preferably the plant is selected from the group consisting of cereal plants, vegetable plants, fruit plants, and flowers.

As used herein, "cereal plants" refers to any plant producing edible components from their grain or seeds. Examples of cereal plants are barley, wheat, corn, rice, sorghum, oat, millet, triticale, and rye plants, among others.

As used herein, "vegetable plants" refers to any plant producing edible parts, including leaves, stem, roots, tubers, fruits, bulbs, and flowers. Examples of vegetable plants are root and tuber vegetables (carrots, potatoes, beets, sweet potato, turnips, and radishes, among others), leafy vegetables (lettuces, spinach, rocket, Lamb's lettuce, and chard, among others), brassica vegetables (broccoli, head cabagge, cauliflower, Brussels sprouts, kale, and Chinese cabbage, among others), fruiting vegetables (tomatoes, peppers, eggplants, cucumbers, melon, watermelon, zucchini, pumpkins, and squash, among others), bulb vegetables (garlic, onion, leeks, and shallots, among others), and stem vegetables (asparagus, cardoons, celery, and artichokes, among others).

As used herein, the term "fruit plants" refers to any plant producing an edible mature ovary. Examples of fruit plants are citrus fruits (mandarin, tangerin, lemon, lime, and orange trees, among others), tree nuts (almond, chestnut, and hazelnut trees, among others), pome fruits (apple, and pear trees, among others), stone fruits (peach, cherry, plum, and apricot trees, among others), berries and small fruits (strawberry, raspberry, currant, blueberry, and blackberry plants, among others), grapes (grapevine and table grape plants), olive tree, tropical and subtropical fruit plants (avocado, kiwi, passion fruit, dates, coconuts, litchis, kaki, persimmons, figs, mango, banana, papaya, guava, pomegranate, and pineapple plants, among others).

As used herein, "industrial plants" refers to a wide range of plants that are cultivated or processed for various industrial purposes. These purposes can include producing raw materials, generating energy, manufacturing products, and more. Examples of industrial plants are textile plants, oilseed plants, aromatic plants, medicinal plants, forage plants. Particular examples of industrial plants are sugarcane, eucalyptus trees, jatropha, bamboo, rubber trees, cacao, agave, soy bean, algae, soybean, sisal, hemp, hops, sugar beet, cassava, tobacco plants, among others.

As used herein, "ornamental plants" refers to plants that are grown for decoration including flowers and cut flowers. Examples of ornamental plants are turf, tulips, gerbera, chrysanthemum, hydrangea, geraniums, cacti, succulents, amaryllis, iris, orchid, rose, carnation, daffodil, and lily, among others.

As used herein, the expression "legume plant" refers plants producing legumes. Examples of leguminous plants are bean, lentil, pea, chickpea, peanut, lupin, and soybean plants, among others.

As used herein, "textile plants" refers to plants producing fiber materials that can be used for producing textiles and fabrics. Examples of textile plants include cotton, flax, ramie, sisal, hemp, jute, kenaf and kapok plants, among others.

As used herein, "oilseed plants" refers to plants producing seeds which are used for the production of edible oil. Examples of oilseed plants are sunflowers, safflower, rapeseed, sesame, canola, palm, and soybean plants, among others.

The expression "aromatic plants" refers to plants producing substances in their leaves, stems, flowers, or other parts with a particular fragrance that can be used for cooking and making essences. Examples of aromatic plants are basil, cilantro, chives, lemongrass, fennel, dill, mint, oregano, rosemary, thyme, lavender, sage, parsley, and chamomile plants, among others.

As used herein, the expression "medicinal plants" refers to plants producing active compounds that can have beneficial effects on human health. Examples of medicinal plants include aloe vera, ginger, turmeric, echinacea, peppermint, ginseng, valerian, opium poppy plants, among others.

As used herein, the expression "forage plants" refers to plants cultivated to provide nutritious and palatable feed for livestock animals. Examples of forage plants include timothy, bermuda grass, fescue, ryegrass, clover, alfalfa, and vetch plants, among others.

The term "flowers" includes both cut flowers and planted flowers.

In a preferred embodiment, the use of diformylamine or an agriculturally acceptable salt thereof improves of one or more of a feature selected from the group consisting of plant height, plant weight, chlorophyll content of the leaves of the plant, nitrogen content of the leaves of the plant, spike length, spike weight, grains per spike, empty grains per spike, kernel weight, harvest yield.

As used herein, the term "improvement" refers to an increase in one or more of a feature selected from the group consisting of plant height, plant weight, chlorophyll content of the leaves of the plant, nitrogen content of the leaves of the plant, spike length, spike weight, grains per spike, Thousand Kernel Weight, harvest yield; and/or a decrease in the empty grains per spike.

As used herein, the term "increase" refers to a greater value in the corresponding feature of a plant wherein diformylamine or an agriculturally acceptable salt thereof has been used when compared to the value of the same feature in a plant where diformylamine or an agriculturally acceptable salt thereof has not been used. Preferably, the value in the corresponding feature of a plant wherein diformylamine or an agriculturally acceptable salt thereof has been used is at least 5% greater than the value of the same feature in a plant where diformylamine or an agriculturally acceptable salt thereof has not been used, more preferably at least 10% greater, more preferably at least 15% greater, more preferably at least 20% greater, more preferably at least 25% greater, more preferably at least 30% greater, more preferably at least 35% greater, more preferably at least 40% greater, more preferably at least 45% greater, still more preferably at least 50% greater.

As used herein, the term "decrease" refers to a lower value in the corresponding feature of a plant wherein diformylamine or an agriculturally acceptable salt thereof has been used when compared to the value of the same feature in a plant where diformylamine or an agriculturally acceptable salt thereof has not been used. Preferably, the value in the corresponding feature of a plant wherein diformylamine or an agriculturally acceptable salt thereof has been used is at least 5% less than the value of the same feature in a plant where diformylamine or an agriculturally acceptable salt thereof has not been used, more preferably at least 10% less, more preferably at least 15% less, more preferably at least 20% less, more preferably at least 25% less, more preferably at least 30% less, more preferably at least 35% less, more preferably at least 40% less, more preferably at least 45% less, still more preferably at least 50% less.

As used herein, the feature "plant height" refers to the length of the plant measured from the base of the stem to the top of the canopy or its highest part. It may be determining by measuring with a suitable instrument such as a ruler.

As used herein, the feature "plant weight" refers to the fresh weight whole plant, including the roots. It may be determined by weighting the different parts of the plant on a balance.

The feature "chlorophyll content of the leaves of the plant" refers to the amount of chlorophyll present in the leaves of a plant. The results are obtained as SPAD values, it may be determined by Konica Minolta chlorophyll meters.

The feature "nitrogen content of the leaves of the plant" refers to the amount of nitrogen present in the leaves of a plant. It is a value related to the chlorophyll content in the plant and is obtained using chlorophyll measurement equipment.

The term "spike length" refers to the length of the spike of a plant. Parameter measured in cereal crop, using a ruler.

The term "spike weight" refers to the weight of the spike of a plant. Parameter measured in cereal crop. It may be determined by weighting the spike using a balance.

The feature "grains per spike" refers to the number of grains (empty or filled) present in a spike. Parameter measured in cereal crop. It may be determined by counting the number of grains per spike.

The feature "empty grains per spike" refers to the number of empty grains present in a spike. Parameter measured in cereal crop. It may be determined by counting the number of grains that have not reached full formation.

The feature "Thousand Kernel Weight" refers to the weight of 1000-kernel of the crop. It may be determined by weighting the 1000-kernel using a balance.

The feature "harvest yield" refers to the amount of production per unit of harvested area. It may be determined by harvesting the experimental area and weighing the results.

In a preferred embodiment, the use of diformylamine or an agriculturally acceptable salt thereof is for the improvement in a cereal plant of one or more of a feature selected from the group consisting of plant height, chlorophyll content of the leaves of the plant, nitrogen content of the leaves of the plant, spike length, spike weight, grains per spike, empty grains per spike, kernel weight, and harvest yield.

In a preferred embodiment, the use of diformylamine or an agriculturally acceptable salt thereof is for the improvement in a plant selected from vegetable plants, fruit plants and ornamental plants of one or more of a feature selected from the group consisting of chlorophyll and nitrogen content of the plant leaves, and plant weight.

Preferably, the plant is subjected to abiotic stress factors, preferably to drought, and/or wherein the plant is subjected to chemical stress factors, preferably to an herbicide. Thus, in one embodiment the plant is subjected to abiotic stress factors, preferably to drought. In another embodiment the plant is subjected to chemical stress factors, preferably to an herbicide. In yet another embodiment the plant is subjected to abiotic stress factors, preferably to drought, and to chemical stress factors, preferably to an herbicide.

Abiotic stress factors include include drought, floods, extreme temperatures, such as cold, frost, and heat, and salinity, preferably drought.

Chemical stress factors include herbicides, air pollutants, and heavy metals, preferably herbicides. Examples of herbicides are glyphosate, 2,4-dichlorophenoxyacetic acid (2,4-D), aminopyralid, atrazine, clopyralid, cloransulam-methyl, dicamba, glufosinate ammonium, fluazifop, fluroxypyr, imazapyr, imazapic, imazamox, linuron, 2-methyl-4-chlorophenoxyacetic acid (MCPA), metolachlor, metam, paraquat, pendimethalin, picloram, sodium chlorate, triclopyr, fazasulfuron, metsulfuron-methyl, among others; preferably glyphosate and 2,4-dichlorophenoxyacetic acid.

The diformylamine or the agriculturally acceptable salt thereof may be applied before, after or when the plant is already being subjected to the stress factor. Preferably, diformylamine or the agriculturally acceptable salt thereof is applied before the plant is subjected to the stress factor. In another embodiment, diformylamine or the agriculturally acceptable salt thereof is applied after the plant is being subjected to the stress factor. In another embodiment, diformylamine or the agriculturally acceptable salt thereof is applied when the plant is already being subjected to the stress factor. In another embodiment diformylamine or the agriculturally acceptable salt thereof is applied before and after the plant is subjected to the stress factor. In another embodiment diformylamine or the agriculturally acceptable salt thereof is applied before, during and after the plant is subjected to the stress factor.

The diformylamine or the agriculturally acceptable salt thereof may be applied to any part of the plant or to the soil near the plant. Preferably, the diformylamine or the agriculturally acceptable salt thereof is applied to the leaves of the plant.

The diformylamine or the agriculturally acceptable salt thereof may be applied as such, or as a solution, preferably as an aqueous solution.

As used herein, the expression "aqueous solution" refers to a solution comprising water as a solvent, preferably comprising at least 40 wt% of water with respect to the total weight of the solution, preferably at least 45 wt%, more preferably at least 50 wt%, still more preferably at least 55 wt%.

The solution may be applied to the plants by any conventional means in the art, such as by spraying or irrigation, preferably by spraying, more preferably by foliar spraying.

The amount of diformylamine or the agriculturally acceptable salt thereof present in the solution, in particular in the aqueous solution, is from 15 to 35 wt% with respect to the total weight of the solution, more preferably from 20 to 30 wt%, still more preferably from 24 to 28 wt%.

Preferably the solution further comprises a potassium source, more preferably potassium hydroxide. Preferably, the amount of potassium source present in the solution is from 1 to 15 wt% with respect to the total weight of the solution, more preferably from 5 to 10 wt%.

Preferably, the diformylamine or the agriculturally acceptable salt thereof is applied at a rate at a rate of from 100 to 1000 g/ha, preferably at a rate of from 100 to 500 g/ha, more preferably at a rate of from 100 to 400 g/ha, still more preferably at a rate of from 250 to 350 g/ha, wherein g/ha refers to the grams of diformylamine (and when provided in the form of an agriculturally acceptable salt thereof it refers to the equivalent grams of free diformylamine) per hectare of plant cultivation.

In a preferred embodiment, the use of diformylamine or an agriculturally acceptable salt thereof is for the improvement in cut flowers of one or more of a feature selected from the group consisting of weight, visual aspect, and life extension.

The term "improvement in cut flowers" refers to an increase in one or more of a feature selected from the group consisting of weight, visual aspect, and life extension. In particular, the term "increase" refers to a greater value in the corresponding feature of a plant wherein diformylamine or an agriculturally acceptable salt thereof has been used when compared to the value of the same feature in a plant where diformylamine or an agriculturally acceptable salt thereof has not been used. Preferably, the value in the corresponding feature of a plant wherein diformylamine or an agriculturally acceptable salt thereof has been used is at least 5% greater than the value of the same feature in a plant where diformylamine or an agriculturally acceptable salt thereof has not been used, more preferably at least 10% greater, more preferably at least 15% greater, more preferably at least 20% greater, more preferably at least 25% greater, more preferably at least 30% greater, more preferably at least 35% greater, more preferably at least 40% greater, more preferably at least 45% greater, still more preferably at least 50% greater.

The feature "weight" refers to the weight of the cut flower and may be determined by weighting the cut flower using a balance.

The feature "visual aspect" refers to appearance of the corolla of the cut flower. This feature is determined by classifying the appearance in a scale of 1 to 5, wherein 1 is bad appearance of the corolla and 5 is a good appearance, according to Figure 1.

The feature "life extension" refers to the time it takes for the flower to achieve an unacceptable visual aspect. It is determined as the time elapsed since the flower is cut until it reaches an unmarketable visual appearance or aspect as defined above.

When diformylamine or the agriculturally acceptable salt thereof is used in cut flowers, it is preferably applied as solution, preferably as an aqueous solution.

When diformylamine or the agriculturally acceptable salt thereof is used in cut flowers as a solution, preferably the concentration of the diformylamine or the agriculturally acceptable salt thereof in the solution is from 0.01 to 1 g/L, more preferably from 0.1 to 0.5 g/L, still more preferably from 0.25 to 0.35 g/L.

When diformylamine or the agriculturally acceptable salt thereof is used in cut flowers as a solution, said solution is may applied to the leaves of the flower plant before cutting the flowers and/or to the stem of the flowers after cutting the flowers. In one embodiment, it is applied to the leaves of the flower plant before cutting the flowers or to the stem of the flowers after cutting the flowers. In one embodiment, it is applied to the leaves of the flower plant before cutting the flowers and to the stem of the flowers after cutting the flowers. In another embodiment it is applied to the leaves of the flower plant before cutting the flowers. In yet another embodiment it is applied to the stem of the flowers after cutting the flowers.

The application of the solution to the leaves of the flower plant before cutting the flowers is preferably carried out by spraying, more preferably by spraying 24 to 48 hours before cutting the flower. Preferably, the application of the solution to the stem of the flowers is performed immediately after cutting the flowers and may be carried out by immersing part of the stem of the flowers in the solution, in particular for 10-20 min.

The following examples represent specific embodiments of the present invention. They do not intend to limit in any way the scope of the invention defined in the present description.

### Examples

### Materials and methods

### Test composition:

| *Component* | *wt%* |
|---|---|
| Diformylamine | 26.08 |
| KOH 50% (aqueous solution) | 14.28 |
| Water | 59.64 |
| pH | 3.85 |

The test composition was prepared by mixing the ingredients at room temperature, before each application and using the enough water volume for each specific test.

Determination of % of chlorophyll and nitrogen content: In order to determine the % chlorophyll and nitrogen in the crop, the measuring instrument Plant chlorophyll meter NYS-B was used. A standard number of leaves per crop was selected for these assessments. The selected leaves should be at a similar stage of development on all plants. Sampling was done at the upper leaf part, at the opposite end to the leaf petiole and between the leaf margin and the midrib. The % chlorophyll in leaf (SPAD values) and Nitrogen (mg/g) values are obtained in the same measurement.

### Example 1. Study on the effect of diformylamine on barley crop under water stress conditions

A field trial was performed in Altarejos, Cuenca (Spain). The objective of this trial was to evaluate the efficacy of the test composition applied at different rates (0.5 l/ha, 1 l/ha y 2 l/ha).

One field experiment was performed on barley cv. Lavanda (*Hordeum distichon*)*.* The sowing was carried out on 02/01/2023 at 120 kg/ha. A randomized complete block design was implemented, with 4 replications per treatment and a plot size of 24 m². The trial was placed in a non-irrigated field. The application was performed on 27/03/2023 at BBCH 21 [Meier, U. *Growth states* of *mono- and dicotyledonous plants,* Edition 2001, Federal Biological Research Centre for Agriculture and Forestry]. A foliar application was made at a water volume of 200 l/ha using a BS-ES hydraulic spray boom of 22 m width.

The assessment considered in this study were:
- Height plant (in cm), length (cm) and weight (g) spikes, number of grains per spike and TKW of barley crop. For this type of assessment, random sampling of 1m² per plot has been carried out. In each square meter, the relevant evaluations were made by counting the number of grains, measuring the length of the spike or the height of the plant with a field ruler and obtaining the weight (g) of one thousand grains (TKW).
- Yield (kg/ha): An experimental micro-plot harvesting machine has been used to obtain the value of kg/plot and the calculation has been extrapolated to kg/ha, to obtain a commercial value.

The evaluations were carried out at 28 and 80 days after application (DA-A)

The trial has been placed in a field where there is no irrigation system and where the decrease in rainfall and increase in temperatures has been observed throughout the different growing seasons. In the 2021 growing season (January 2021-June 2021), average data of 1.26 mm and 10.7 °C were obtained. In the 2022 growing season (January 2022 - June 2022), average data of 0.81 mm and 11.28 °C were obtained. In the 2023 growing season (January 2023 - June 2023), average data of 0.55 mm and 11.15 °C were obtained. The growing area is considered a drought risk area for cereal cultivation.

The results are shown in Tables 1-9 below:

**Table 1. Average value of chlorophyll content in barley leaves (% SPAD) at 28 DA-A**

| *Treatment* | *% SPAD* |
|---|---|
| Untreated | 13.1 |
| Test composition 0.5 l/ha | 32.2 |
| Test composition 1 l/ha | 45.5 |
| Test composition 2 l/ha | 48.0 |

**Table 2. Average value of nitrogen content in barley leaves (mg/g) at 28 DA-A**

| *Treatment* | *Nitrogen content (mg*/*g)* |
|---|---|
| Untreated | 6.8 |
| Test composition 0.5 l/ha | 13.0 |
| Test composition 1 l/ha | 17.1 |
| Test composition 2 l/ha | 17.9 |

**Table 3. Average value of plant height (cm) at 28 DA-A**

| *Treatment* | *Plant height (cm)* |
|---|---|
| Untreated | 43.8 |
| Test composition 0.5 l/ha | 53.1 |
| Test composition 1 l/ha | 79.2 |
| Test composition 2 l/ha | 59.9 |

**Table 4. Average value of spike length (cm) at 28 and 80 DA-A**

| | *28 DA-A* | *80 DA-A* |
|---|---|---|
| *Treatment* | *Spike length (cm)* | *Spike length (cm)* |
| Untreated | 5.0 | 5.5 |
| Test composition 0.5 l/ha | 5.5 | 6.5 |
| Test composition 1 l/ha | 9.5 | 7.5 |
| Test composition 2 l/ha | 8.0 | 7.1 |

**Table 5. Average value of spike weight (g) at 28 DA-A**

| *Treatment* | *Spike weight (g)* |
|---|---|
| Untreated | 0.3 |
| Test composition 0.5 l/ha | 0.4 |
| Test composition 1 l/ha | 0.6 |
| Test composition 2 l/ha | 0.6 |

**Table 6. Average value of grains per spike at 28 DA-A**

| *Treatment* | *Grains per spike* |
|---|---|
| Untreated | 16.0 |
| Test composition 0.5 l/ha | 19.0 |
| Test composition 1 l/ha | 26.3 |
| Test composition 2 l/ha | 25.3 |

**Table 7. Average value of Thousand Kernel Weight (TKW) (g) at 80 DA-A**

| *Treatment* | *TKW (g)* |
|---|---|
| Untreated | 421.8 |
| Test composition 0.5 l/ha | 441.8 |
| Test composition 1 l/ha | 589.8 |
| Test composition 2 l/ha | 563.5 |

**Table 8. Average value of empty grains per spike at 80 DA-A**

| *Treatment* | *Empty grains per spike* |
|---|---|
| Untreated | 5.5 |
| Test composition 0.5 l/ha | 3.3 |
| Test composition 1 l/ha | 0.1 |
| Test composition 2 l/ha | 0.4 |

**Table 9. Harvest yield (kg/ha) at 80 DA-A**

| *Treatment* | *Yield (kg*/*ha)* |
|---|---|
| Untreated | 1732.0 |
| Test composition 0.5 l/ha | 2587.0 |
| Test composition 1 l/ha | 6058.8 |
| Test composition 2 l/ha | 4681.8 |

The first assessment was made 28 days after application. At this point, the plant height measurement shows a clear rate effect with statistically significant differences between the experimental treatments tested and untreated. In the other parameters evaluated (% of Chlorophyll content, Nitrogen content, Spike length and weight) statistically differences were observed when the test composition at 1 Uha was compared with untreated control.

At harvest (80 days after application), yield data (kg/ha) was collected and quality parameters such as thousand kernel weight and other parameters such as spike length were assessed. Statistical differences are observed between the different doses of the experimental treatments and the untreated plots, but the best yield (kg/ha) is observed when the experimental product at 1l/ha is compared. The harvest data obtained in the control plots are those expected for the area and growing season.

After an analysis of these results, it can be concluded that the application of the test composition at the time of BBCH 21 (moment of herbicide application) produces a biostimulant effect on the crop which is observed at different stages of crop development and finally produces an increase in yield.

This trial was carried out under conditions of water stress, as the plot is not irrigated and a decrease in annual rainfall was observed.

### Example 2. Study on the effect of diformylamine on peppers under water stress conditions

A greenhouse trial was performed in L'Alcudia, Valencia (Spain). The objective of this trial was to evaluate the efficacy of the test composition applied at 1 l/ha under water stress conditions (drought). The test composition was also compared with a fertilizer solution at 1 l/ha comprising the same amount of nitrogen (ureic nitrogen at 5%). The composition of the fertilizer solution is: 79.14 g water, 10.86 g urea and 10 g KCI.

The greenhouse trial was carried out on pepper plants cv. veleta F1 (*Capsicum annuum*)*.* A randomized block design was used, with 10 replicates per treatment. The plants were grown in 7 L pots to control water stress.

A foliar application was carried out using a Matabi spray backpack (Pre-Pressure Sprayer BERRY 7 - 81847), at 6 bar pressure, 1000 l/ha and BBCH 29.

To study the biostimulant effect on the crop, the chlorophyll and nitrogen content in the leaves were evaluated at 0, 3, 7, 10 and 12 days after the application, using a NYS-B equipment. For the evaluation, leaves of the same stage of development were selected, 10 samples per treatment.

The water stress conditions of the crop in the test was achieved by cutting off the usual watering two hours before the application and without re-supplying water to any plant during the entire test.

The results are shown in Tables 10-11 below:

**Table 10. Average value of chlorophyll content in pepper plant leaves (% SPAD) at 0, 3, 7, 10 and 12 DA-A**

| | *SPAD* (%) | | |
|---|---|---|---|
| | *Untreated* | *Test composition* | *Fertilizer* |
| 0 DA-A | 41.474 | 43.630 | 43.440 |
| 3 DA-A | 41.350 | 43.170 | 47.770 |
| 7 DA-A | 39.410 | 39.390 | 39.210 |
| 10 DA-A | 36.960 | 40.280 | 37.080 |
| 12 DA-A | 29.710 | 39.450 | 34.054 |

**Table 11. Average value of nitrogen content (mg/g) in pepper plant leaves at 0, 3, 7, 10 and 12 DA-A**

| | *Nitrogen content (mg*/*g)* | | |
|---|---|---|---|
| | *Untreated* | *Test composition* | *Fertilizer* |
| 0 DA-A | 15.670 | 16.250 | 16.050 |
| 3 DA-A | 15.060 | 16.130 | 15.350 |
| 7 DA-A | 14.460 | 15.075 | 14.610 |
| 10 DA-A | 13.901 | 15.880 | 14.980 |
| 12 DA-A | 12.097 | 14.909 | 13.566 |

Significant differences are observed in the chlorophyll content 10 days after the application and increase at 12 DA-A, being clearly visible when the control (29.7%) and the fertilizer (34.1%) are compared with the test composition (39.4%). Regarding the nitrogen concentration, the significant differences are observed 3 days after the application and are maintained until the end of the test (12 DA-A) when the test composition is compared with the control and the fertilizer.

### Example 3. Study on the effect of diformylamine on lettuce under water stress conditions

The trial was carried out in L'Alcudia, Valencia (Spain). The objective of the trial was to evaluate the efficacy of the test composition at a dose of 1 l/ha under 50% water stress conditions vs. normal irrigation. Normal irrigation implied irrigation 30 min 4 days per week; and water stress conditions implied irrigation 30 min 2 days per week.

The experiment was carried out on lettuce plants cv. roman (*Lactuca sativa).* The trial design was in randomized blocks of 10 plants per treatment. The cultures were in pots with a volume of 7 L. An application (A) was made in the different treatments on the same day, before cutting the irrigation to the pots (0 DA-A), both in for water stress conditions and normal irrigation. Therefore, the plants still did not have water stress. In application (A) the test composition was used at a dose of 1l/ha. Application (B) was carried out 14 days after application A. In this case, the plants with water stress already had symptoms of stress caused by the lack of water. For application B, the same dose of the test composition (1 l/ha) was used.

The BBCH of the crops in application A was 23 in lettuce. Application (A) was carried out by dripper irrigation system at 2 l/hour in the pots. The BBCH of the crops in application B was 29 in lettuce. Application (B) was made identical to A, by irrigation at 2 l/hour with drip system in the pots.

Assessments were carried out at 0 DA-A (0 days before application A), 3 DA-A (3 days after the first application), 7 DA-A (7 days after the first application), 14 DA-A (14 days after the first application), 7 DA-B (7 days after the second application) and 14 DA-B (14 days after the second application).

For measurements of aerial part weight and root weight, a scale (VEVOR High Precision Digital Laboratory Analytical Scale 0.01 g X 5000 g) was used at the end of the test (14 DA-B). The plants were removed from the pots one by one and the lettuce necks were cut to weigh the aerial part. The roots were removed from the soil and weighed with the same scale.

The results are shown in Tables 12-15 below:

**Table 12. Average value of the weight of the aerial part of the lettuce (g) at 14 DA-B**

| *Treatment* | *Weight (g)* |
|---|---|
| Untreated without water stress | 34.1 |
| Test composition 1 l/ha without water stress | 39.1 |
| Untreated with water stress | 22.1 |
| Test composition 1 l/ha with water stress | 29.1 |

**Table 13. Average value of the root weight of the lettuce (g) at 14 DA-B**

| *Treatment* | *Weight (g)* |
|---|---|
| Untreated without water stress | 32.1 |
| Test composition 1 l/ha without water stress | 40.1 |
| Untreated with water stress | 19.6 |
| Test composition 1 l/ha with water stress | 27.1 |

**Table 14. Average value of chlorophyll content in lettuce leaves (% SPAD) at 0 DA-A, 3 DA-A, 7 DA-A, 14 DA-A, 7 DA-B and 14 DA-B**

| | *% SPAD* | | | |
|---|---|---|---|---|
| | *Untreated without water stress* | *Test composition 1 l*/*ha without water stress* | *Untreated with water stress* | *Test composition 1 l*/*ha with water stress* |
| 0 DA-A | 36.2 | 36.2 | 35.9 | 36.0 |
| 3 DA-A | 35.8 | 36.2 | 35.9 | 35.9 |
| 7 DA-A | 34.4 | 36.1 | 30.4 | 32.5 |
| 14 DA-A | 33.7 | 36.4 | 26.4 | 31.2 |
| 7 DA-B | 33.0 | 36.9 | 24.5 | 30.8 |
| 14 DA-B | 31.7 | 37.3 | 22.1 | 30.0 |

**Table 15. Average value of nitrogen content in lettuce leaves (mg/g) at 0 DA-A, 3 DA-A, 7 DA-A, 14 DA-A, 7 DA-B and 14 DA-B**

| | *% SPAD* | | | |
|---|---|---|---|---|
| | *Untreated without water stress* | *Test composition 1 l*/*ha without water stress* | *Untreated with water stress* | *Test composition 1 l*/*ha with water stress* |
| 0 DA-A | 14.9 | 14.9 | 14.3 | 14.4 |
| 3 DA-A | 14.0 | 14.4 | 13.5 | 13.9 |
| 7 DA-A | 13.9 | 14.2 | 12.1 | 13.2 |
| 14 DA-A | 14.3 | 14.7 | 10.4 | 12.9 |
| 7 DA-B | 12.7 | 14.0 | 9.7 | 12.2 |
| 14 DA-B | 12.6 | 14.8 | 9.0 | 11.9 |

The exposure of a crop to water stress causes a clear loss of weight over time in general. However, it can be seen that in the case of the treated plants, the results show statistical differences both for the leaves (aerial part) and for the roots (root part), in some cases almost doubling the weight of untreated plants with water stress. The results of the tests without water stress also show the ability of the product to increase the biomass yield of the crop.

It is very evident how throughout the test the differences in chlorophyll content become more acute. Also for this feature it can be seen how the treated plants have responded better to the lack of water than the untreated ones.

Finally, with respect to the nitrogen concentration in the leaves, statistical differences were observed between the different treatments. As expected, the results obtained without water stress are the best ones. At the end of the test, it can be observed how the test composition without water stress gives the best values of the untreated plants without water stress. Under water stress conditions, the test composition treatment gave the best results.

### Example 4. Study on the effect of diformylamine on lettuce and tomato under chemical stress conditions

A greenhouse trial was performed in L'Alcudia, Valencia (Spain). The objective of this trial was to evaluate the efficacy of the test composition applied at 1 l/ha under chemical stress conditions caused by the application of an herbicide (glyphosate 36%).

The greenhouse trial was carried out on roman lettuce type (*Lactuca sativa*) and tomato cv. optima (*Solanum lycopersium*)*.* A randomized block design was used, with 5 tomato replicates and 5 lettuce replicates per treatment. The plants were grown in 7 L pots.

An application (A) was made with the different treatments in a preventive way and a second application (B) was made 2 hours after the first application in all the crops with the herbicide (glyphosate 36%). In application (A) a volume of 1 liter of water and 1 ml of the test composition was used. In application (B) a volume of 0.5 liters of water and 7ml of herbicide was used, the same in all treatments.

The BBCH of the crops was 29 for tomato and 22 for lettuce. The two applications (A and B) were made foliar with a Matabi spray backpack (Pre-Pressure Sprayer BERRY 7 - 81847).

The evaluations were carried out at 0 DA-A (before the first application), 3 DA-A (3 days after the first and second application) and 7 DA-A (7 days after the first and second application). 5 tomato leaves and 5 lettuce leaves per treatment were evaluated. A specific measuring device (Plant chlorophyll meter NYS-B) was used.

The results are shown in Tables 16-17 below:

**Table 16. Average value of chlorophyll content in lettuce and tomato leaves (% SPAD) at 0, 3 and 7 DA-A**

| | *SPAD (%)* | | | |
|---|---|---|---|---|
| | *Lettuce* | | *Tomato* | |
| | *Untreated* | *Test composition 1 l*/*ha* | *Untreated* | *Test composition 1 l*/*ha* |
| 0 DA-A | 35.8 | 35.9 | 45.8 | 46.0 |
| 3 DA-A | 31.7 | 33.9 | 42.5 | 44.2 |
| 7 DA-A | 27.5 | 32.1 | 37.7 | 40.0 |

**Table 17. Average value of nitrogen content (mg/g) in in lettuce and tomato leaves at 0, 3, and 7 DA-A**

| | *Nitrogen content (mg*/*g)* | | | |
|---|---|---|---|---|
| | *Lettuce* | | *Tomato* | |
| | *Untreated* | *Test composition 1 l*/*ha* | *Untreated* | *Test composition 1 l*/*ha* |
| 0 DA-A | 14.2 | 14.7 | 17.7 | 17.9 |
| 3 DA-A | 12.9 | 14.1 | 15.8 | 16.7 |
| 7 DA-A | 9.8 | 12.8 | 13.3 | 14.7 |

The results show that the treatments with the test composition have helped to reduce the stress caused by the herbicide. Although the harmful effect of the herbicide causes damage to the photosynthetic metabolism by reducing the levels of % SPAD over time, this reduction is much less in the plants treated with the test composition than in the untreated ones. This is observed for both tomato and lettuce.

Similar results are observed with respect to nitrogen concentration. Although the effect of glyphosate reduces nitrogen concentration over time, the treated plants show better behavior and resilience to the damaging effects of the herbicide when compared to the untreated ones.

### Example 5. Study on the effect of diformylamine on cut flowers

The trial was carried out in L'Alcudia, Valencia (Spain). The objective of the trial was to evaluate the biostimulant effect of the Seidsu at a dose of 1 l/ha in ornamental flowers (gerberas), in particular to evaluate the effect of the product on the useful life of flowers. The results were compared with an untreated control (UTC).

The experiment was carried out on gerbera plants (*Gerbera sp*.) with flowers of different colors.

Two different product application methodologies were used:
1. Foliar application (B): The control flower was cut and for the treated flowers the test composition was immediately applied by spraying at a rate of 0.5 l/ha and left for 24 hours until it was cut. Next, the flowers were stored in a chamber with their individual container having only water.
2. Absorption method (A): Each of the flowers was placed in an individual container of 200 ml capacity. In that same container, the mixture of water (150 ml) + "TREATMENT" was added so that the concentration of the test composition used was 0.1% (which would correspond to 1 ml/l). In the untreated control (UTC) the same method of application was carried out, but only with water.

The features considered in this study were:
- Average weight (in g) of cut flowers and their evolution over time; knowing that the flowers will naturally lose weight, reversing or slowing down this process would be an adequate objective in case of positive results. For this type of assessment, the weight of each flower was measured periodically using a laboratory balance.
- Appearance/Aspect: following a visual scale (according to Figure 1) appropriate to monitor the progressive senescence and/or dehydration of plant tissues; a visual scale was designed to be able to represent said advance in time wherein 5 is the best appearance and 1 the worst one (see Figure 1).
- Durability or life extension refers to the time it takes for the flower to achieve an unacceptable visual aspect. It is determined as the time elapsed since the flower is cut until it attains a visual aspect having a value of 3 according to the scale used for determining the visual aspect.

The evaluations were carried out at 0, 5, 7, 9, 13, 16, 19, 21, 23 and 27 DA-A (after application of Absorption treatment (A)) or at 0, 5, 7, 9, 13, 16, 19, 21, 23 and 27 DA-B (after application of Foliar treatment (B)).

The results are shown in Tables 18-23:

**Table 18. Average flower weight (g) at 0, 5, 7, 9, 13, 16, 19, 21, 23 and 27 DA-A (after application of treatment A)**

| | *Weight (g)* | |
|---|---|---|
| | *Untreated* | *Test composition 1 ml*/*l* |
| 0 DA-A | 9.71 | 9.57 |
| 5 DA-A | 11.76 | 11.98 |
| 7 DA-A | 11.68 | 12.03 |
| 9 DA-A | 11.53 | 11.96 |
| 13 DA-A | 11.28 | 11.86 |
| 16 DA-A | 10.90 | 11.56 |
| 19 DA-A | 10.41 | 11.32 |
| 21 DA-A | 9.89 | 10.94 |
| 23 DA-A | 9.63 | 10.63 |
| 27 DA-A | 7.16 | 9.55 |

**Table 19. Average visual aspect at 0, 5, 7, 9, 13, 16, 19, 21, 23 and 27 DA-A (after application of treatment A) according to the scale provided in Figure 1**

| | *Visual aspect* | |
|---|---|---|
| | *Untreated* | *Test composition 1 ml*/*l* |
| 0 DA-A | 5.00 | 5.00 |
| 5 DA-A | 4.75 | 5.00 |
| 7 DA-A | 4.50 | 5.00 |
| 9 DA-A | 4.25 | 5.00 |
| 13 DA-A | 4.00 | 4.75 |
| 16 DA-A | 3.75 | 4.75 |
| 19 DA-A | 3.50 | 4.25 |
| 21 DA-A | 2.50 | 4.00 |
| 23 DA-A | 2.25 | 3.50 |
| 27 DA-A | 1.75 | 2.75 |

**Table 20. Average life extension (days) after application of treatment A**

| | *Life extension (days)* |
|---|---|
| Untreated | 17.00 |
| Test composition 1 ml/l | 22.00 |

**Table 21. Average flower weight (g) at 0, 5, 7, 9, 13, 16, 19, 21, 23 and 27 days after cutting the flower (untreated vs. treatment B)**

| | *Weight (g)* | |
|---|---|---|
| | *Untreated* | *Test composition 1 ml*/*l* |
| 0 DA-B | 14.26 | 13.60 |
| 5 DA-B | 16.00 | 16.22 |
| 7 DA-B | 15.02 | 15.87 |
| 9 DA-B | 16.75 | 15.39 |
| 13 DA-B | 14.44 | 15.10 |
| 16 DA-B | 13.85 | 14.78 |
| 19 DA-B | 12.91 | 14.84 |
| 21 DA-B | 12.47 | 14.53 |
| 23 DA-B | 12.27 | 14.23 |
| 27 DA-B | 11.03 | 13.20 |

**Table 22. Average visual aspect at 0, 5, 7, 9, 13, 16, 19, 21, 23 and 27 days after cutting the flower (untreated vs. treatment B) according to the scale provided in Figure 1**

| | *Visual aspect* | |
|---|---|---|
| | *Untreated* | *Test composition 1 ml*/*l* |
| 0 DA-B | 5.00 | 5.00 |
| 5 DA-B | 5.00 | 5.00 |
| 7 DA-B | 4.50 | 5.00 |
| 9 DA-B | 4.00 | 4.50 |
| 13 DA-B | 4.00 | 4.50 |
| 16 DA-B | 3.00 | 4.50 |
| 19 DA-B | 3.00 | 4.00 |
| 21 DA-B | 2.50 | 3.50 |
| 23 DA-B | 2.00 | 3.50 |
| 27 DA-B | 2.00 | 3.00 |

**Table 23. Average life extension (days) after cutting the flower (untreated vs. treatment B)**

| | Life extension *(days)* |
|---|---|
| Untreated | 14.0 |
| Test composition 1 ml/l | 19.5 |

The test composition showed an increase of 5 days on average in the extension of the useful life of the flowers (life extension) with respect to the control in the case of the absorption method. In the case of foliar application, the useful life is extended with respect to the control by 5.5 days.

Regarding the average weight of the flowers, the test composition showed a greater accumulation of liquid, being 2 g above the control by the absorption method. In the case of foliar application, the accumulation of liquid equivalent to the weight of the flowers, the test composition ended with 2.5 g more than the control.

With respect to the visual aspect or appearance of the cut flower, it can be observed that the test composition always maintained the flower in better conditions when compared to the control in the two tested product application methodologies.

## Claims

1. Use of diformylamine or an agriculturally acceptable salt thereof as a plant biostimulant.

2. Use according to claim 1 wherein diformylamine is in the form of free diformylamine, its potassium salt or mixtures thereof.

3. Use according to claim 1 or 2, wherein the plant is selected from the group consisting of cereal plants, vegetable plants, fruit plants, industrial plants, and ornamental plants; preferably wherein the plant is selected from the group consisting of vegetable plants, cereal plants, legume plants, fruit plants, textile plants, oilseed plants, aromatic plants, medicinal plants, forage plants, flowers and ornamental plants, more preferably wherein the plant is selected from the group consisting of cereal plants, vegetable plants, fruit plants, and flowers.

4. Use according to any one of the preceding claims, for the improvement of one or more of a feature selected from the group consisting of plant height, plant weight, chlorophyll content of the leaves of the plant, nitrogen content of the leaves of the plant, spike length, spike weight, grains per spike, empty grains per spike, kernel weight, and harvest yield.

5. Use according to any one of the preceding claims, for the improvement in a cereal plant of one or more of a feature selected from the group consisting of plant height, chlorophyll content of the leaves of the plant, nitrogen content of the leaves of the plant, spike length, spike weight, grains per spike, empty grains per spike, kernel weight, and harvest yield.

6. Use according to any one of claims 1 to 4, for the improvement in a plant selected from vegetable plants, fruit plants and ornamental plants of one or more of a feature selected from the group consisting of chlorophyll content of the leaves of the plant, nitrogen content of the leaves of the plant, and plant weight.

7. Use according to any one of the preceding claims wherein the plant is subjected to abiotic stress factors, preferably to drought, and/or wherein the plant is subjected to chemical stress factors, preferably to an herbicide.

8. Use according to claim 7, wherein the diformylamine or the agriculturally acceptable salt thereof is applied to the plant before the plant is subjected to the stress factor.

9. Use according to any one of the preceding claims, wherein the diformylamine or the agriculturally acceptable salt thereof is applied to the leaves of the plant.

10. Use according to any one of the preceding claims, wherein the diformylamine or the agriculturally acceptable salt thereof is applied as solution, preferably as an aqueous solution, more preferably by spraying.

11. Use according to claim 10, wherein the solution further comprises a potassium source, preferably potassium hydroxide.

12. Use according to any one of the preceding claims, wherein the diformylamine or the agriculturally acceptable salt thereof is applied at a rate of from 100 to 1000 g/ha, preferably at a rate of from 250 to 350 g/ha.

13. Use according to any one of claims 1 to 3, for the improvement in cut flowers of one or more of the features selected from the group consisting of weight, visual aspect, and life extension.

14. Use according to claim 13, wherein the diformylamine or the agriculturally acceptable salt thereof is applied as solution, preferably as an aqueous solution, more preferably wherein the concentration of the diformylamine or the agriculturally acceptable salt thereof in the solution is from 0.01 to 1 g/L.

15. Use according to claim 14, wherein the solution is applied to the leaves of the flower plant before cutting the flowers or wherein the solution is applied to the stem of the flowers after cutting the flowers.
